# EUROPÄISCHE PATENTSCHRIFT

(11) **EP 3 065 447 B1**
(45) Veröffentlichungstag und Bekanntmachung des Hinweises auf die Patenterteilung: **01.11.2023**
(21) Anmeldenummer: 15157186.6
(22) Anmeldetag: 02.03.2015
(51) Int. Cl.: H04L 43/50, H04W 24/06, H04W 24/08, H04W 4/90, H04W 4/14, H04W 4/40, G08B 25/01, G08B 25/08, G08G 1/09, G07C 5/00, G01S 19/00, H04W 4/02

(54) **VERFAHREN UND TESTGERÄT ZUM TESTEN EINES KFZ-TELEMATIK-GERÄTS EINES MOBILFUNKGESTÜTZTEN KFZ-NOTRUFSYSTEMS**
METHOD AND TEST DEVICE FOR TESTING AN AUTOMOTIVE TELEMATICS DEVICE OF A MOBILE RADIO-BASED AUTOMOTIVE EMERGENCY CALL SYSTEM
PROCÉDURE ET APPAREIL DE TEST POUR TESTER UN APPAREIL TÉLÉMATIQUE AUTOMOBILE D'UN SYSTÈME D'APPEL D'URGENCE AUTOMOBILE BASÉ SUR LA TÉLÉPHONIE MOBILE

(43) Veröffentlichungstag der Anmeldung: 07.09.2016
(73) Patentinhaber: Rohde & Schwarz GmbH & Co. KG, 81671 München (DE)
(72) Erfinder: Roesner, Thomas, 81671 München (DE); Hof, Christian, 82256 Fürstenfeldbruck (DE)
(74) Vertreter: Isarpatent

(56) Entgegenhaltungen:
- US-A1- 2010 113 011
- US-A1- 2013 178 203
- "ERA GLONASS Terminal Mandatory Requirements, Draft (version 1.8)", , 19. November 2012 (2012-11-19), Seiten 1-24, XP055210882, Moscow, Russia Gefunden im Internet: URL:http://web.archive.org/web/20121119073 001/http://www.ivankuten.com/wp-content/up loads/2011/05/ERA-GLONASS-Terminal-Mandato ry-Requirements.pdf [gefunden am 2015-09-02]
- "Newproducts", IEEE INSTRUMENTATION & MEASUREMENT MAGAZINE, IEEE SERVICE CENTER, PISCATAWAY, NJ, US, Bd. 17, Nr. 3, 1. Juni 2014 (2014-06-01), Seiten 52-57, XP011549943, ISSN: 1094-6969, DOI: 10.1109/MIM.2014.6825392 [gefunden am 2014-06-03]
- YONG-HUA CHENG ET AL: "An Android system design and implementation for Telematics services", INTELLIGENT COMPUTING AND INTELLIGENT SYSTEMS (ICIS), 2010 IEEE INTERNATIONAL CONFERENCE ON, IEEE, PISCATAWAY, NJ, USA, 29 October 2010 (2010-10-29), pages 206-210, XP031818813, DOI: 10.1109/ICICISYS.2010.5658766 ISBN: 978-1-4244-6582-8

## Beschreibung

### GEBIET DER ERFINDUNG

Die vorliegende Erfindung betrifft ein Verfahren und ein Testgerät zum Testen eines KFZ-Telematik-Geräts eines KFZ-Notrufsystems, insbesondere eines mobilfunkgestützten Notrufsystems für oder in einem Kraftfahrzeug.

### TECHNISCHER HINTERGRUND

US 2013/178203 A1 beschreibt ein Verfahren zum Testen drahtloser elektronischer Geräte mithilfe eines Kurznachrichtendienstes. Ein zu testendes Gerät kann unter Verwendung einer Hochfrequenz-Teststation getestet werden. Die Teststation umfasst ein abgeschirmtes Gehäuse. Das zu testende Gerät kann während des Tests in das abgeschirmte Gehäuse eingesetzt werden.

US 2010/113011 A1 beschreibt ein Testsystem für drahtlose elektronische Geräte. Während des Testens kann ein drahtloses elektronisches Gerät in eine Testkammer gestellt werden. Das drahtlose elektronische Gerät kann unter Verwendung von Nachrichten kommunizieren, die mit Mobilfunkkommunikationsprotokollen kompatibel sind, wie beispielsweise Kurznachrichtendienstnachrichten (SMS).

Die vorliegende Erfindung befindet sich im Umfeld von Telematik-basierten Systemen, insbesondere in der Kraftfahrzeugtechnik. Diese Telematiksysteme haben in den vergangenen Jahren in der Kraftfahrzeugtechnik mehr und mehr Einzug erhalten. Diese so genannte Verkehrstelematik bzw. der international gebräuchliche Begriff ITS (engl. Intelligent Transport Systems) bezeichnet das Erfassen, Übermitteln, Verarbeiten und Nutzen verkehrsbezogener Daten mit dem Ziel der Organisation, Information und Lenkung des Verkehrs unter Nutzung von Informations- und Kommunikationstechnologien. Neben der Steigerung der Effizienz der vorhandenen Verkehrsinfrastruktur, Vermeidung von Staus, Kombination der Vorteile der einzelnen Verkehrsträger, Verringerung der Umweltbelastung durch Steuerung des Verkehrs ist es ein weiteres Ziel solcher Verkehrstelematiksysteme, die Verkehrssicherheit zu erhöhen.

Ein der Verkehrssicherheit dienendes Verkehrstelematiksystem ist ein mobilfunkgestütztes Notrufsystem, welches in Europa zum Beispiel unter der Bezeichnung eCall bekannt ist. Bei eCall, was eine Kurzform für "emergency call" ist, handelt es sich um ein von der Europäischen Union geplantes, automatisches Notrufsystem für Kraftfahrzeuge. Diese Notrufsysteme beinhalten im Fahrzeug montierte Telematik-Geräte, die einen erkannten Verkehrsunfall automatisch an eine Notrufzentrale PSAP (Public Safety Answering Point) zusammen mit einem Minimaldatensatz melden, sodass durch rasch initiierte Rettungsmaßnahmen Auswirkungen von Unfällen reduziert werden. Das eCall-Notrufsystem kann automatisch oder manuell ausgelöst werden. Solche eCall-Notrufsysteme sind z.B. in aktuellen Fahrzeugen der Firma BMW AG eingebaut.

Damit die ordnungsgemäße Funktion solcher Notrufsysteme in allen Betriebslagen sichergestellt ist, sollten diese regelmäßig getestet werden. Problematisch ist, dass für den Test das fahrzeuginterne Telematik-Gerät des Notrufsystems nicht ohne weiteres ausgebaut werden kann, da nach dessen Testen und Wiedereinbau nicht gewährleitet ist, dass das Telematik-Gerät ordnungsgemäß funktioniert. Insofern muss das Telematik-Gerät im eingebauten Zustand getestet werden. Zum Testen der Notruffunktion könnte zwar der Notruf manuell betätiget werden. Jedoch würde dies unmittelbar das Absetzen eines Notrufes implizieren, was als missbräuchliche Betätigung nicht zulässig ist.

Für den Test von mobilen Endgeräten, wie etwa dem Telematik-Gerät eines Notrufsystems, existieren eigens dafür vorgesehene Testgeräte. Für den Test müsste das Testgerät die Notruffunktion des Telematik-Gerätes und folglich dessen Mobilfunkschnittstelle aktivieren. Problematisch ist hier, dass auch während des Tests in der Regel eine Basisstation in der Empfangsreichweite des zu testenden Telematik-Gerätes des Notrufsystems befindlich ist, so dass auch ein während des Tests ausgesendetes Notrufsignal üblicherweise von der Notrufzentrale als echter Notruf erkannt werden würde. Auch dies gilt es zu vermeiden.

### ZUSAMMENFASSUNG DER ERFINDUNG

Vor diesem Hintergrund besteht der Bedarf der vorliegenden Erfindung darin, Telematik-Geräte von mobilen Notrufsystemen zu testen, ohne dass infolge des Testes ein echter Notruf an eine Notrufzentrale ausgesendet wird.

Erfindungsgemäß sind ein Verfahren und ein Testgerät mit den Merkmalen der unabhängigen Patentansprüche vorgesehen. Weiter vorteilhafte Ausführungsformen sind Gegenstand der abhängigen Patentansprüche.

Die der vorliegenden Erfindung zugrunde liegende Idee besteht darin, eine SMS-Funktion (SMS = Short Message System) eines mobilfunkgestützten Notrufsystems, wie zum Beispiel eines Kraftfahrzeug-Notrufsystems, zum Testen eines zu testenden Telematik-Geräts des Notrufsystems zu nutzen. Diese spezielle SMS-Funktion wird erfindungsgemäß eigens zum Testen des Notrufsystems verwendet. Zu diesem Zweck verfügt eine Kommunikationsschnittstelle des Testgerätes über eine SMS-Funktion. Für einen Testvorgang wird von der Kommunikationsschnittstelle des Testgerätes ein spezieller SMS-Befehl erzeugt, der an die Adresse des zu testenden Telematik-Geräts des Notfunksystems gesendet wird und mit welchem das zu testende Telematik-Gerät angesprochen wird. Dieser spezielle SMS-Befehl ist in der Art eines Challenge-Response-Befehls ausgebildet, der somit das zu testende Telematik-Gerät dazu veranlasst, die angeforderte Antwort unter Umgehung der Notrufzentrale unmittelbar und ausschließlich an das den SMS-Befehl sendende Testgerät zurückzusenden, also an die Kommunikationsschnittstelle des Testgerätes.

Der spezielle SMS-Befehl, der von der Kommunikationsschnittstelle des Testgerätes ausgesendet wird, beinhaltet eine Rücksende-Aufforderung. Mittels der Aufforderung zum Zurücksenden, welches in dem von dem Testgerät gesendeten SMS-Befehls kodiert ist, wird das zu testende Telematik-Gerät, welches diesen SMS-Aufforderungsbefehl empfängt, dazu veranlasst, die angeforderten Testinformation zusammenzustellen und an den Sender, das heißt an das Testgerät, zurückzusenden. Auf diese Weise wird zu Testzwecken eine bidirektionale Kommunikationsverbindung zwischen dem Testgerät und dem zu testenden Telematik-Gerät aufgebaut. Es wird somit auf sehr elegante Weise verhindert, dass das zu testende Telematik-Gerät die angeforderten Testinformationen, die lediglich zu Testzwecken dienen, unerwünschterweise an eine Notrufzentrale sendet.

Mittels der erfindungsgemäßen Lösung ist es möglich, ein drahtloses Testen von Notrufsystemen und insbesondere deren (fahrzeuggebundener) Telematik-Geräte zu implementieren. Der besondere Vorteil besteht darin, dass mittels der erfindungsgemäßen Lösung ein beim Testen irrtümlich gesendeter Notruf an eine Notrufzentrale unterbleibt. Das Notrufsystem lässt sich somit auch während des Betriebes und im eingebauten Zustand testen.

Unter SMS (Short Message System) ist ein Dienst (Service) zur Übertragung von Kurznachrichten bezeichnet, wobei auch die übermittelten Nachrichten als SMS bezeichnet werden. Verglichen mit einem normalen Telefongespräch haben Kurzmitteilungen im SMS-Format einen niedrigen Steuerungsaufwand. Der SMS-Dienst nutzt einen Signalisierungs-Kanal des jeweiligen Mobilfunkstandards.

Vorteilhafte Ausgestaltungen und Weiterbildungen ergeben sich aus den weiteren abhängigen Patentansprüchen sowie aus der Beschreibung unter Bezugnahme auf die Figuren der Zeichnung.

Gemäß einer bevorzugten Ausgestaltung ist das Antwortsignal ein SMS-Antwortsignal, also eine Kurznachricht. Dadurch ist der Dateninhalt des Antwortsignals reduziert.

In einer besonders vorteilhaften Ausgestaltung ist der SMS-Rücksendebefehl derart ausgebildet, das zu testende Telematik-Gerät beim Empfang des SMS-Rücksendebefehls dazu veranlasst wird, keine Notrufverbindung an eine Notrufzentrale aufzubauen und somit das Absetzen eines Notrufs zu unterbinden. Damit erfolgt ausschließlich eine Kommunikation zwischen Testgerät und zu testendem Telematik-Gerät. Die Notrufzentrale wird somit nicht durch einen "unechten" Notruf beeinträchtigt.

Der SMS-Rücksendebefehl ist derart ausgebildet, das zu testende Telematik-Gerät dazu zu veranlassen, ein Antwortsignal mit einem minimalen Datensatz bzw. Minimaldatensatz zu erzeugen, welches an das den SMS-Rücksendebefehl sendende Testgerät zurückgesendet wird. Vorzugsweise enthält der minimale Datensatz bzw. Minimaldatensatz zumindest eine der folgenden Testinformation:
- Format der übermittelten Informationen;
- Zeitinformationen;
- aktuelle Koordinaten bzw. den Ort des Kraftfahrzeugs;
- frühere Koordinaten bzw. den Ort des Kraftfahrzeugs;
- Fahrtrichtung;
- Fahrzeug-ID;
- Service-Provider-ID;
- Daten von Kraftfahrzeug-internen Sicherheitssystemen;
- Zahl der Fahrzeuginsassen;
- Antriebstyp.

Es ist möglich diese oder Teile dieser Informationen in einem oder wenigen SMS-Antwortsignal, welches als Kurznachricht nur einen begrenzten Dateninhalt aufweist, zu integrieren, sodass damit eine sehr elegante und einfache Testmöglichkeit geschaffen wird.

Vorzugsweise ist das Notrufsystem das ERA-GLONASS Notrufsystem ist. Im ERA-GLONASS Notrufsystem ist der als SMS-Rücksendebefehl als EGTS_ECALL_MSD_REQ bezeichnet. Dieser Befehl ist im Protokoll für die Datenübertragung von Kraftfahrzeugnotrufsystemen gemäß dem russischen Standard GOST R 54619-2011 hinterlegt ist, welcher hiermit vollinhaltlich mit einbezogen wird. Bei diesem speziellen Befehl handelt es sich um einen "MSD resend command", der nur über SMS genutzt wird.

Die zum Testen verwendete Funkverbindung ist eine Mobilfunkverbindung eines Mobilfunknetzes. Das Testen des zu testenden Telematik-Geräts erfolgt über diese Mobilfunkverbindung. Für den Testvorgang ist neben dem Testgerät keine weitere Infrastruktur erforderlich, da für die Kommunikationsverbindung eine Luftschnittstelle eines ohnehin meist vorhandenen Mobilnetzes verwendet werden kann.

In einer alternativen, besonders vorteilhaften Ausgestaltung simuliert das Testgerät für die Funkverbindung eine Basisstation. Das Testen des zu testenden Telematik-Geräts erfolgt dann über die von der simulierten Basisstation erzeugte Funkverbindung. Der Testvorgang ist somit unabhängig vom Einfluss anderer Infrastrukturelemente, wie etwa einem Mobilnetz, wodurch beim Testen von diesen verursachte Störungen oder Ungenauigkeiten vermieden werden können.

In einer weiteren, besonders vorteilhaften Ausgestaltung simuliert das Testgerät ein Satellitensystem. Das Testen erfolgt anhand von Satelliteninformationen des simulierten Satellitensystems. Damit wird sichergestellt, dass das zu testende Testgerät vorgegebene Satelliteninformationen erhält, welche durch den Testvorgang verifiziert werden können.

In einer weiteren Ausgestaltung erfolgt das Testen des zu testenden Telematik-Geräts in einer abgeschirmten Testkammer. Dadurch werden unerwünschte oder störende Einflüsse aus der Testumgebung vermieden.

In einer besonders vorteilhaften Ausgestaltung ist das Testmodul dazu ausgebildet, neben dem zu testenden Telematik-Gerät zusätzlich auch andere Funktionen desselben Kraftfahrzeugs zu testen. Das Testgerät ist beispielsweise in der Lage, z.B. das Sicherheitssystem (z.B. Airbag, Sensoren, ESP, ASR), Komfortelemente im Fahrzeug (z.B. Sitze, Lautsprecher, Mikrophone, Klimaanlage), das Navigationssystem, das Antriebssystem und dergleichen zu testen. Dies ist ohne allzu große Änderung möglich, nachdem diese Elemente in einem Kraftfahrzeug typischerweise an demselben gemeinsamen Daten- und Steuerbus wie das Telematik-Gerät angekoppelt sind.

In einer weiteren Ausgestaltung ist das Testgerät dazu ausgebildet, ein zu testendes Notrufsystem aktiv anzusprechen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: anhand eines schematischen Blockschaltbildes den Aufbau eines ERA-GLONASS Notrufsystems;
- Fig. 2: anhand eines schematischen Blockschaltbildes den Aufbau eines in einem Kraftfahrzeug vorhandenen ERA-Moduls;
- Fig. 3: anhand eines schematischen Blockschaltbildes ein Ausführungsbeispiel eines Testaufbaus zum Testen eines Telematik-Geräts;
- Fig. 4: anhand eines Datenflussdiagramms die Funktion eines Testvorganges;
- Fig. 5: anhand eines schematischen Blockschaltbildes einen weiteren Testaufbau zum Testen eines Telematik-Geräts;
- Fig. 6: anhand eines schematischen Blockschaltbilds einen weiteren Testaufbau zum Testen eines Telematik-Geräts.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente und Komponenten - sofern nichts Anderes ausgeführt ist - jeweils mit denselben Bezugszeichen versehen.

### BESCHREIBUNG VON AUSFÜHRUNGSBEISPIELEN

Die vorliegende Erfindung wird nachfolgend anhand des ERA-GLONASS-Systems beschrieben, ohne allerdings die Erfindung darauf zu beschränken.

GLONASS ist ein globales Satellitennavigationssystem der Russischen Föderation, welches im Aufbau und der Funktionsweise dem US-amerikanischen NAVSTAR-GPS und dem europäischen Galileo ähnelt. Technisch basiert GLONASS auf ähnlichen Prinzipien wie GPS. Im Gegensatz zum GPS senden bei GLONASS alle Satelliten mit gleichem Code, aber auf unterschiedlichen Frequenzen im Dezimeterwellenbereich. Das Projekt ERA-GLONASS bezieht sich auf ein Notrufsystem für Kraftfahrzeuge. Dieses Notrufsystem für Kraftfahrzeuge basiert auf einem kraftfahrzeuginternen Telematik-Gerät, welches bei einem erkannten Verkehrsunfall automatisch eine Notrufmeldung absetzt. Diese Notrufmeldung enthält zusätzliche Informationen über den Unfall oder das Kraftfahrzeug. Dieses ERA-GLONASS Notrufsystem ist dem europäischen eCall Notrufsystem ähnlich und soll vorzugsweise mit diesem kompatibel sein.

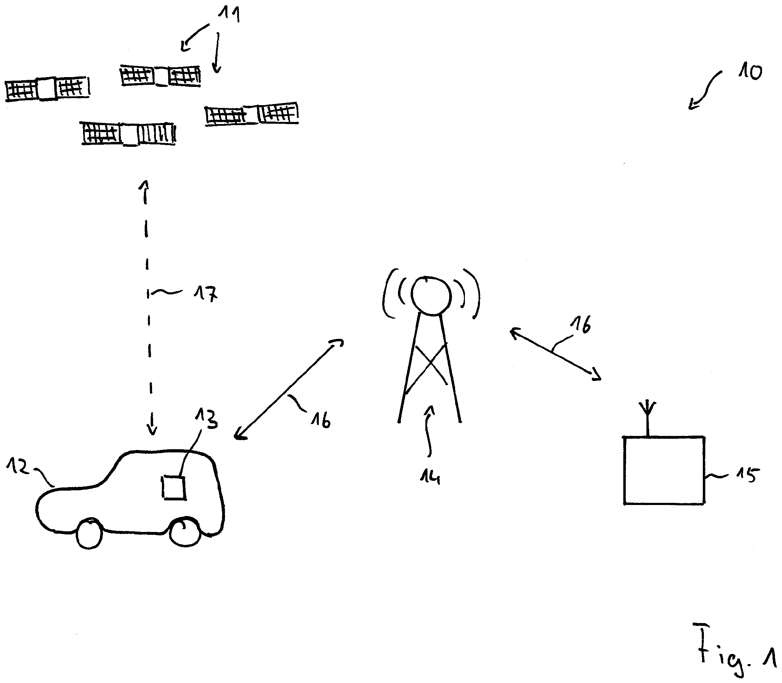

Fig. 1 zeigt anhand eines schematischen Blockschaltbildes den Aufbau eines ERA-GLONASS Notrufsystems. Das ERA-GLONASS Notrufsystem 10 setzt sich zusammen aus einem Satellitensystem 11, ein in einem Kraftfahrzeug 12 vorhandenes ERA-Modul 13, ein Mobilfunknetz 14 und eine Notrufzentrale 15.

Wesentlicher Bestandteil des ERA-GLONASS Notrufsystems 11 ist das Vorhandensein eines Satellitensystems 11 für eine möglichst lückenlose Flächenabdeckung. Das GLONASS-Satellitensystem 11 umfasst hierzu etwa 24 Satelliten, damit gewährleistet werden kann, dass immer zumindest drei und vorzugsweise zumindest vier Satelliten in direktem Kontakt mit jedem Punkt an der Erdoberfläche vorhanden sind. Mittels vierer Satelliten lässt sich eine Ortsbestimmung, das heißt die Höhe über dem Meeresspiegel, die geographische Breite und Länge eines Objektes vornehmen. Im Falle der Zeit sind relativ hohe Anforderungen an die Genauigkeit gestellt, da ein Zeitfehler von einer Mikrosekunde bereits zu einem signifikanten Ortsfehler führt. Mobile Empfänger benötigen daher für eine vollständige und vor allem für eine exakte Ortsbestimmung als vierten Parameter die exakte Uhrzeit, für deren Bestimmung Signale eines vierten Satelliten erforderlich sind. Die Satellitenkommunikationsverbindung ist in Fig. 1 mit 17 bezeichnet.

Das im Kraftfahrzeug 12 vorhandene ERA-Modul 13 bezeichnet ein Telematik-Gerät 13. Dieses ERA-Modul 13 ist in der Lage, sowohl mit dem Satellitensystem 11 als auch mit dem Mobilfunknetz 14 in kommunikative Verbindung zu treten.

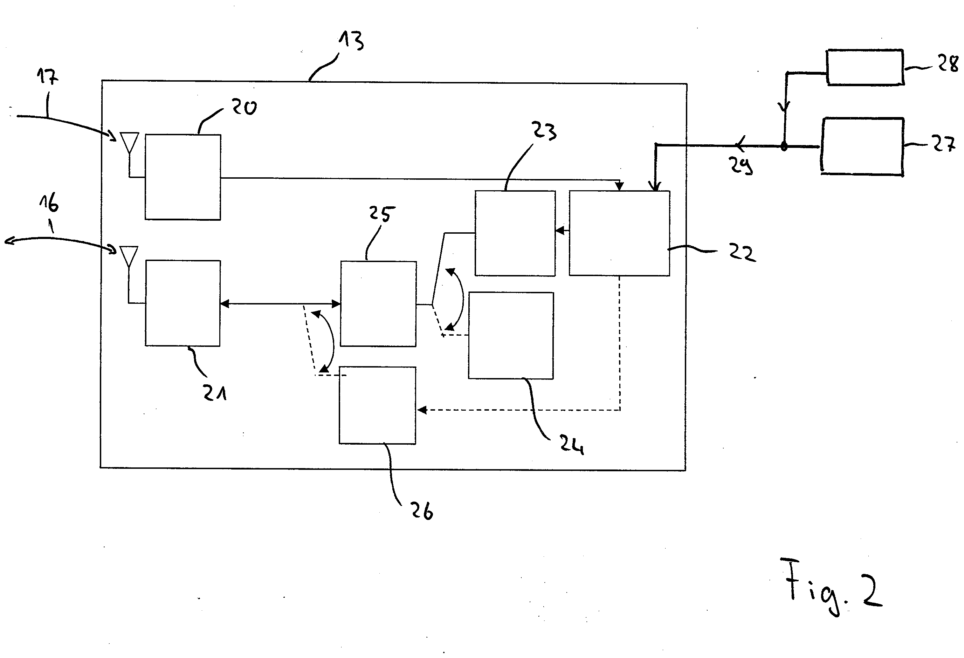

Fig. 2 zeigt anhand eines schematischen Blockschaltbildes den Aufbau eines in einem Kraftfahrzeug vorhandenen ERA-Moduls.

Das ERA-Modul 13 umfasst einen GLONASS-Empfänger 20, einen Hochfrequenz-Transceiver 21, eine Recheneinrichtung 22, ein Modem 23, ein Audiomodul 24, ein Codec-Modul 25 sowie ein SMS-Modul 26.

Über den GLONASS-Empfänger 20 erhält das ERA-Modul 13 regelmäßig die erforderlichen Satelliten-Informationen 17, wie etwa eine vollständige Ortsbestimmung und die genaue Uhrzeit. Diese Satelliten-Informationen 17 werden permanent geliefert und in der nachgeschalteten Recheneinrichtung 22 ausgewertet.

Sofern das Kraftfahrzeug einen Verkehrsunfall hat, kann dieses Unfallereignis von einer ERA-Modul 13 externen Einrichtung 27, beispielsweise von einer geeigneten Sensorik, automatisch erkannt und angezeigt werden. Zusätzlich oder alternativ kann dies beispielsweise auch durch einen Fahrzeuginsassen durch Betätigung einer Notruftaste 28 angezeigt werden. Über diese Einrichtungen 27, 28 wird somit ein Notrufsignal 29 erzeugt und der Recheneinrichtung 22 zugeführt, die dann einen minimalen Datensatz bzw. Minimaldatensatz erzeugt.

Der Minimaldatensatz MSD (Minimum Set of Data) enthält z.B. den Unfallzeitpunkt, die genauen Koordinaten des Unfallorts, die beispielsweise durch das Navigationssystem ermittelt werden, die Fahrtrichtung, Fahrzeug-ID, Service-Provider-ID und eCall-Qualifier. Optional ist auch die Übermittlung von Daten von Bordsicherheitssystemen möglich, wie der Schwere des Unfallereignisses, der Zahl der Insassen, ob Sicherheitsgurte angelegt waren, ob das Fahrzeug sich überschlagen hat, usw. Diese Informationen können bei modernen Fahrzeugen durch eine eigens hierfür vorgesehene Sensorik ermittelt werden.

In einem Ausführungsbeispiel kann der MSD-Datensatz zum Beispiel eine Anzahl von Datenblöcken mit vorgegebenem Datentyp und Dateninhalt beinhaltet, wie etwa die folgenden Informationen :
1. Format der MSD-Daten;
2. Information zur Identifikation der gesendeten MSD-Daten;
3. Steuerungsdaten;
4. Fahrzeugidentifikation, z.B. Fahrgestellnummer;
5. Antriebstyp, beispielsweise Brennkraftmaschine, elektrischer Antrieb, Wasserstoffantrieb, etc.;
6. Zeitstempel des Unfalls;
7. Fahrzeugort, z.B. basierend auf geographischer Breite und geographischer Länge;
8. Fahrzeugrichtung;
9. Vergangener Ort des Fahrzeuges;
10. Vergangener Ort des Fahrzeuges;
11. Zahl der Fahrzeuginsassen;
12. Zusätzliche Daten für den Notrufservice.

Es versteht sich von selbst, dass nicht notwendigerweise alle der obigen Informationen in dem MSD-Datensatz enthalten sein müssen. Denkbar wäre aber auch, zusätzlich oder alternativ andere MSD-Daten mit anderem Inhalt zu senden.

Der Hochfrequenz-Transceiver 21 des ERA-Moduls 13 ist in der Lage, über das Mobilfunknetz 14 eine Funkverbindung 16, die vorzugsweise bidirektional ausgebildet ist, zu einer Notrufzentral 15 (siehe Fig. 1) aufzubauen, um ein Notrufsignal absetzen. Die MSD-Daten sind dabei in dem Notrufsignal codiert. Diese Notrufzentrale 15 wird häufig auch als PSAP (Public Safety Answering Point) bezeichnet.

Die Funkverbindung 16 kann eine Datenkommunikation und/oder Sprachkommunikation beinhalten. Nachdem ein Operator der Notrufzentrale 15 den Notruf mit den MSD-Daten aufgenommen hat, kann er z.B. eine Sprachverbindung zu dem ERA-Modul 13 aufbauen, mit welchem die Insassen des Kraftfahrzeugs 12 über den Unfall befragt werden, beispielsweise wie stark der Unfall war, inwieweit Hilfe benötigt wird, etc. Diese Sprachinformationen werden von dem Hochfrequenz-Transceiver 21 des ERA-Moduls 13 empfangen und über das Codec-Modul 25 dem Audio-Modul 24 zugeführt. Dieses Audio-Modul 24 beinhaltet typischerweise einen Lautsprecher und ein Mikrofon, über welches die Fahrzeuginsassen bei einer aufgebauten Audio-Verbindung mit dem Operator der Notrufzentrale 15 in Sprachverbindung treten können.

Das ERA-Modul 13 umfasst darüber hinaus als zusätzliche Funktion ein SMS-Modul 26. Dieses SMS-Modul 26 ist im ERA-GLONASS Notrufsystem für eine Rückfall- und/oder Notfallkommunikation vorgesehen. Sollte zum Beispiel die herkömmliche Daten- oder Sprachkommunikation, die zum Beispiel über das Modem 23, das Audio-Modul 24 und das Codec-Modul 25 implementiert sind, nicht funktionsfähig sein, ist es über das SMS-Modul 26 immer noch möglich, eine vereinfachte Datenkommunikation zwischen dem ERA-Modul 13 und der Notrufzentrale 15 basierend auf einer SMS-Kommunikation mit reduziertem Dateninhalt aufzubauen. Zu diesem Zweck ist das SMS-Modul 26 eingangsseitig mit der Recheneinrichtung 22 verknüpft. Diese Recheneinrichtung 22 übermittelt die MSD-Daten im Bedarfsfall an das SMS-Modul 26. Dieses SMS-Modul 26 formatiert die zu sendenden MSD-Daten für eine SMS-Datenübertragung. Das SMS-Modul 26 ist ausgangsseitig mit dem Hochfrequenz-Transceiver 21 gekoppelt. Auf diese Weise ist es möglich, vom SMS-Modul 26 erzeugte und formatierte MSD-Daten über den Hochfrequenz-Transceiver 21 an die Notrufzentrale 15 zu senden.

Darüber hinaus umfasst ERA-GLONASS noch weitere Funktionen, wie beispielsweise das Auffinden von gestohlenen Fahrzeugen oder ein automatisches Mautgebührensystem.

Das Testen derartiger ERA-Module 13 ist nicht trivial, da diese bei deren Aktivieren stets bestrebt sind, eine Kommunikationsverbindung 16 zu der Notrufzentrale 15 aufzubauen. Dies soll im Testbetrieb aber gerade vermieden werden. Die vorliegende Erfindung nutzt für den Testbetrieb erfindungsgemäß eine spezielle Funktion des SMS-Moduls 26 innerhalb des ERA-Moduls 13.

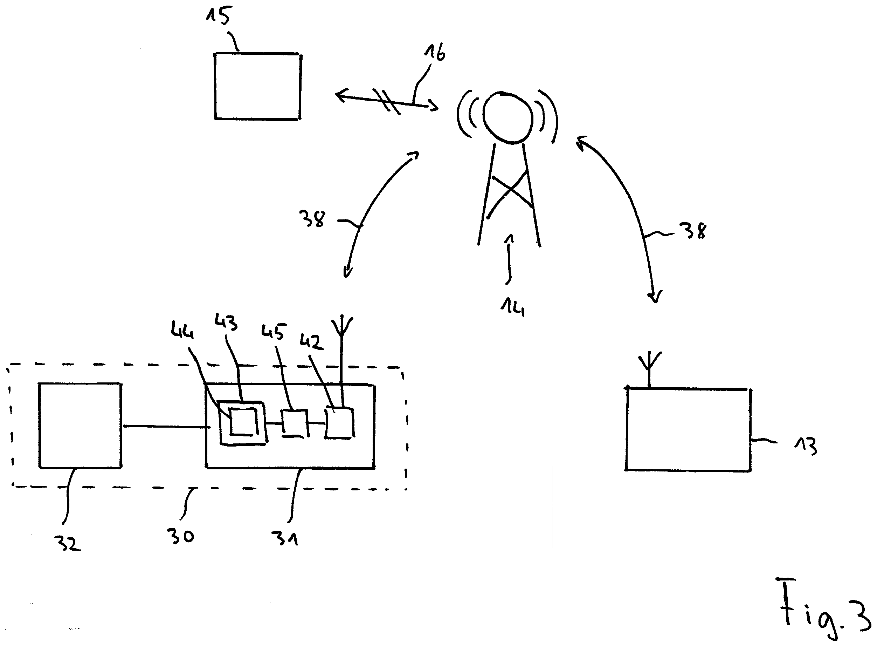

Fig. 3 zeigt anhand eines schematischen Blockschaltbildes ein Ausführungsbeispiel eines Testaufbaus zum Testen eines ERA-Moduls.

Der Testaufbau beinhaltet neben dem ERA-Modul 13 und dem Mobilfunknetz 14 eine Testanordnung 30. Die Testanordnung 30 umfasst ein Testgerät 31 und einen ERA-GLONASS Testserver 32.

Vorzugsweise kann die Funktionalität des ERA-GLONASS Testservers 32 zusammen mit dem Testgerät 31 in einem einzigen Testgerät implementiert sein, jedoch wären auch getrennte Geräte denkbar.

Die Testanordnung 30 bzw. dessen Testgerät 31 ist in der Lage, über eine Funkverbindung 38 des Mobilfunknetzes 14 mit dem ERA-Modul 13 in kommunikative Verbindung zu treten. Von dem Testgerät 31 empfangene Signale können von dem ERA-GLONASS Testserver 32, der mit dem Testgerät 31 zum Beispiel über eine feste Verdrahtung oder dem Internet verknüpft ist, ausgewertet werden.

Das Testgerät 31 umfasst eine Funksende-/Empfangseinrichtung 42, eine Teststeuereinrichtung 43 und ein Testmodul 45.

Die Funksende-/Empfangseinrichtung 42 ist dazu ausgebildet, eine funkgestützte Kommunikation, insbesondere eine Mobilfunkkommunikation, zu betreiben.

Die Teststeuereinrichtung 43 dient der Steuerung eines Testvorgangs. Die Teststeuereinrichtung 43 umfasst hierzu ein SMS-Modul 44, welches dazu ausgebildet ist, einen geeigneten SMS-Rücksendebefehl 33 zu erzeugen. Das Testmodul 45 ist dazu ausgelegt, das ERA-Modul 13 zu testen.

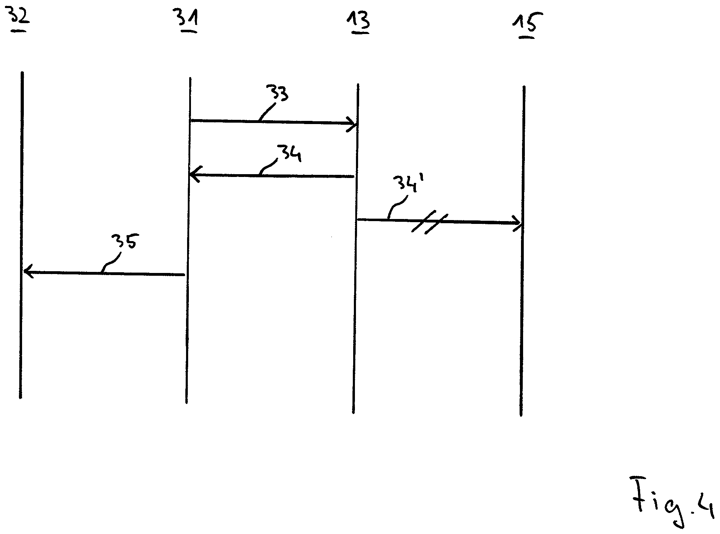

Nachfolgend wird die Funktionsweise für das Testen des ERA-Moduls 13 mit Hilfe der Testanordnung 30 in Fig. 3 und des Datenflussdiagramms in Fig. 4 näher erläutert:
Zum Testen erzeugt das Testgerät 31 einen speziellen SMS-Befehl. Es existieren mehr als 200 SMS-Befehle, wie etwa:
- Command SMS
- Parameter Request SMS
- Parameter Set SMS
- Parameter Add SMS
- Parameter Remove SMS

Wesentlich ist, dass der spezielle SMS-Befehl ein SMS-Rücksendebefehl ist. Dieser SMS-Rücksendebefehl ist vergleichbar zu einem Challenge-Response Befehl. Das Testgerät 31 sendet diesen SMS-Rücksendebefehl 33 an das ERA-Modul 13. Der vom Testgerät 31 ausgesendete SMS-Rücksendebefehl 33 ist ein so genannter MSD-Rücksendebefehl. Demgemäß wird das Zurücksenden von MSD-Daten angefordert. Vorzugsweise handelt es sich bei diesem MSD-Rücksendebefehl um den Befehl "EGTS_ECALL_MSD_REQ", welcher im Protokoll für die Datenübertragung von Kraftfahrzeugnotrufsystemen gemäß dem russischen Standard GOST R 54619-2011 hinterlegt ist.

Die Recheneinrichtung 12 innerhalb dieses ERA-Moduls 13 dekodiert diesen Rücksendebefehl 13, wertet ihn aus und erzeugt basierend auf empfangene Satelliten-Informationen entsprechende MSD-Daten, welche sie dem SMS-Modul 26 zuführt. Das SMS-Modul 26 sendet sodann ein Rücksende-SMS 34 mit den darin codierten MSD-Daten an das Testgerät 31 zurück. Das Testgerät 31 empfängt somit ein Antwortsignal 34, welches MSD-Daten beinhaltet. Diese MSD-Daten werden weitergeleitet (Signal 35) und können von dem ERA-GLONASS Testserver 32 ausgewertet werden.

Aufgrund des SMS-Rücksendebefehls 33 wird verhindert, dass das ERA-Modul 13 ein Notrufsignal 34' an die Notrufzentrale 15 sendet, was in den Figuren 3 und 4 durch die zweifach durchgestrichenen Pfeile angedeutet ist.

Über die SMS-Kommunikation zwischen Testgerät 31 und ERA-Modul 13 unter Verwendung des Mobilfunknetzes 14 ist ein OTA-Testen (OTA = Over The Air) des Notrufsystems 10 und damit des ERA-Moduls 13 ohne zusätzliche kabelgebundene Infrastruktur möglich.

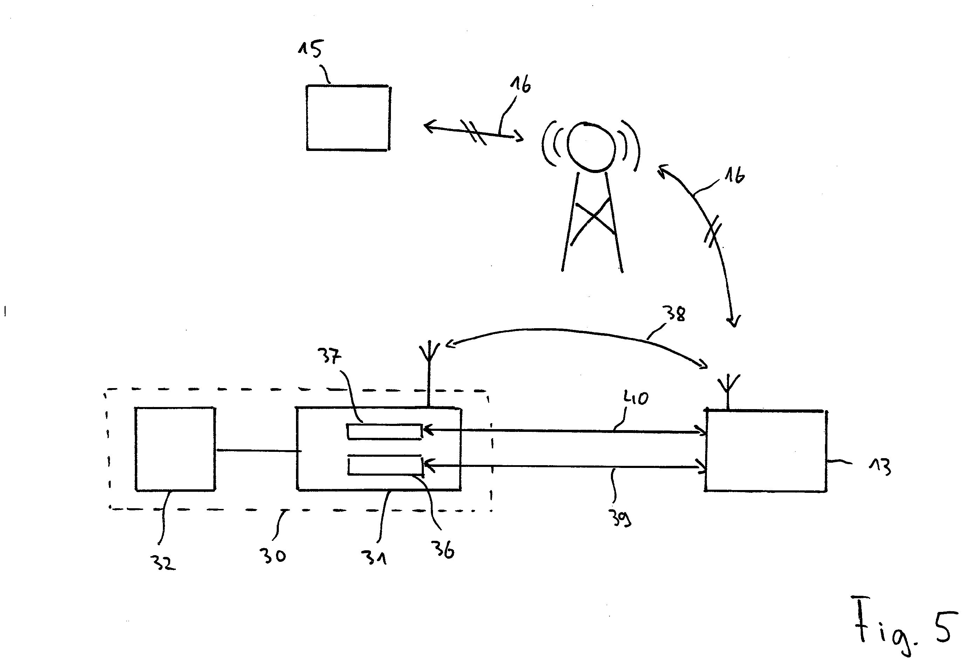

Fig. 5 zeigt anhand eines schematischen Blockschaltbildes einen weiteren Testaufbau zum Testen eines Telematik-Geräts.

Im Unterschied zu dem Ausführungsbeispiel in Fig. 3 beinhaltet das Testgerät 31 gemäß Fig. 5 zusätzliche Funktionen 36, 37.

Das Funktionsmodul 36 ist dazu ausgebildet, eine Basisstation zu simulieren, was mit dem Doppelpfeil 39 zwischen Funktionsmodul 36 und ERA-Modul 13 angedeutet ist. Befindet sich das ERA-Modul 13 in der Nähe des Testgerätes 31, erkennt das ERA-Modul 13 die von dem Testgerät 13 bzw. dessen Funktionsmodul

36 simulierte Basisstation 39. Damit erfolgt eine direkte Kommunikation 38 zwischen dem ERA-Modul 13 und dem Testgerät 31 über die simulierte Basisstation 39. Eine Kommunikationsverbindung 16 zu dem Mobilfunknetz 14 wird damit nicht aufgebaut, was durch zweifach durchgestrichene Pfeile angedeutet ist. Auf diese Weise wird somit ein direktes Testen des ERA-Moduls 13 unter Verwendung der vom Testgerät 31 simulierten Basisstation möglich.

Das weitere Funktionsmodul 37 ist dazu ausgelegt, ein GLONASS-Satellitensystem 40 zu simulieren, was mit dem Doppelpfeil 40 zwischen Funktionsmodul 37 und ERA-Modul 13 angedeutet ist. Auf diese Weise können dem ERA-Modul 13 definierte Satelliteninformation, wie etwa Zeitinformationen und Ortsinformationen, zugeführt werden. Diese vorbekannten Satelliteninformationen werden in bekannter Weise durch die Recheneinrichtung innerhalb des ERA-Moduls 13 ausgewertet und können im Testmodus z.B. als Bestandteil der MSD-Daten über die Kommunikationsverbindung 38 zurück an das Testgerät 31 gesendet werden. Auf diese Weise ist ein Testen auch dieser Satelliteninformationen und damit der ordnungsgemäßen Funktion des ERA-Moduls im Hinblick auf die Auswertung und Weitergabe dieser Informationen möglich.

Das Funktionsmodul 36 ist vorzugsweise in der Lage, verschiedene Mobilfunkstandards zu simulieren, wie etwa GSM, CDMA, LTE, WLAN, Bluetooth und dergleichen. Beim Testen können mittels des Testgerätes 31 sämtliche Protokollschichten getestet werden. Als Funktionsmodul 36 kann zum Beispiel das Testgerät der CMW500-Familie der Firma Rohde & Schwarz verwendet werden.

Das Funktionsmodul 37 ist in der Lage, verschiedene Satellitennavigationssysteme gleichzeitig, wie etwa GPS (USA), GLONASS (Russische Föderation), Galileo (Europäische Union), Beidou (China), oder lediglich einige davon zu simulieren. Bei der Simulation können eine Vielzahl von Satelliten, insbesondere bis zu 24 Satelliten, gleichzeitig simuliert werden. Das Funktionsmodul 37 kann beispielsweise das Testgerät der SMBV100A-Familie der Firma Rohde & Schwarz sein.

Es ist vorteilhaft, die Funktionsmodule 36, 37 als getrennte, eigenständige Stand-Alone-Geräte bereitzustellen. Es wäre allerdings auch denkbar, wenn ein einziges Testgerät 31 vorhanden ist, das die Funktion der beiden Funktionsmodule 36, 37 beinhaltet.

Die Testanordnung 30 stellt einen Messplatz dar, welcher als HF-Tester oder Mobilfunktester zum Testen der Mobilfunkeigenschaften ausgebildet. Diese Testanordnung 30 kann die folgenden Funktionseinrichtungen aufweisen:
- (HF-)Messeinrichtung;
- (HF-)Auswerteeinrichtung;
- Mobilfunkschnittstelle, insbesondere mit SMS-Funktionsmodul;
- Simulationseinrichtung, z.B. Basisstationen-Simulation oder Satellitensimulation;
- Stand-Alone-Servereinrichtung;
- Protokolltester;
- Steuereinrichtung;
- Anzeigeeinrichtung;
- Speichereinrichtung.

Bei der Durchführung eines so genannten Over-the-Air (OTA) Tests wird eine Verbindung zwischen dem Testgerät 31 und dem zu testenden ERA-Modul 13 aufgebaut. Im Anschluss daran werden bestimmte Testprozeduren und Routinen ausgeführt, um insbesondere die Sende- und Empfangsfähigkeit des zu testenden ERA-Moduls 13 im Hinblick auf die Einhaltung der zur ordnungsgemäßen Betriebsfähigkeit geforderten Spezifikationen zu überprüfen. Beim Testen werden z.B. die Funktionalität und Leistungsfähigkeit der Elemente innerhalb des ERA-Moduls 13, die Mobilfunkelemente des ERA-Moduls 13 und beispielsweise auch die Interoperabilität mit anderen Mobilfunkkomponenten getestet. Dabei empfängt das zu testende ERA-Modul 13 spezielle SMS-Rücksendebefehle, interpretiert und verarbeitet diese und sendet entsprechend der Aufforderung zum Rücksenden MSD-Antwortsignale an die Senderadresse mit dem gewünschten MSD-Inhalt zurück. Diese rückgesendeten Signale werden vom Empfangsteil des Testgerätes 31 aufgenommen und zum Beispiel Server 32 interpretiert und mit zu erwartenden Werten und Signalen verglichen.

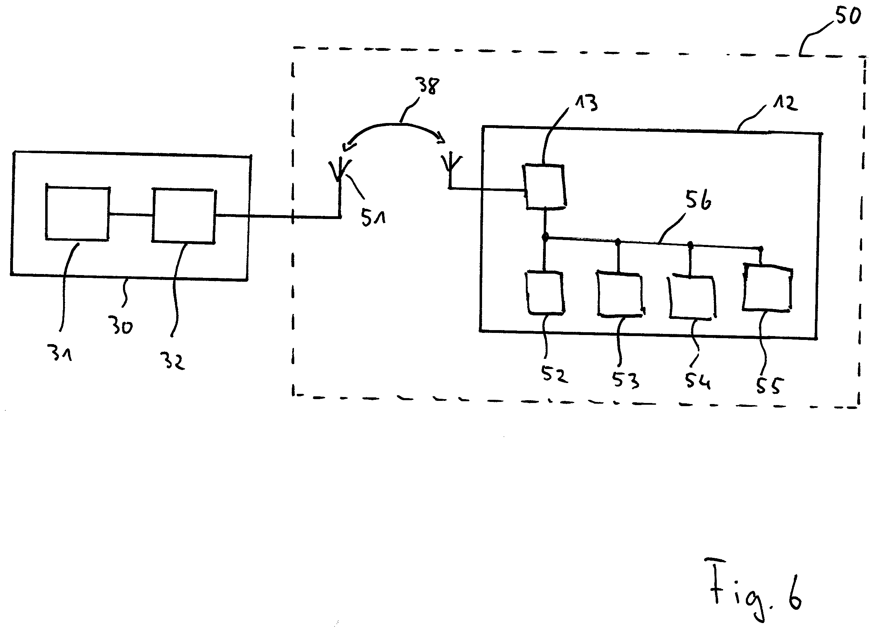

Fig. 6 zeigt anhand eines schematischen Blockschaltbilds einen weiteren Testaufbau zum Testen eines Telematik-Geräts.

In Fig. 6 ist das gesamte Kraftfahrzeug 12 in einer eigens zum Testen vorgesehenen abgeschirmten Testkammer 50 angeordnet. In dieser Testkammer 50 ist darüber hinaus auch eine Empfänger-/Sendeeinrichtung 51 platziert. Diese Sende-/Empfängereinrichtung 51 ist mit dem Testgerät 31 der Testanordnung 30, welche außerhalb der abgeschirmten Testkammer 50 angeordnet ist, verbunden. Durch das Anordnen des ERA-Moduls 13 bzw. des gesamten Kraftfahrzeugs innerhalb der abgeschirmten Kammer 50 wird zusätzlich verhindert, dass das ERA-Modul 13 ein anderes Mobilfunknetz als das durch das Funktionsmodul 36 simulierte Mobilfunknetz auswählt.

Das Kraftfahrzeug 12 weist neben dem ERA-Modul 13 ferner eine Vielzahl weiterer Komponenten 52 - 55 auf, die jeweils an demselben Daten- und Steuerbus 56 des Kraftfahrzeuges 12 angekoppelt sind.

Mittels der Testanordnung 30 sowie des Testgerätes 31 lassen sich zusätzlich auch diese weiteren Komponenten 52 - 55 des Kraftfahrzeuges 12 testen. Der Test dieser Komponenten 52 - 55 kann in analoger Weise wie das Testen des ERA-Moduls 13 erfolgen, das heißt ebenfalls basierend auf einer SMS-Kommunikation. Auf diese Weise lassen sich zum Beispiel Komponenten der Fahrzeugsicherheit, wie zum Beispiel der Airbag, Airbag-Sensoren, ESP (Elektronisches Stabilitätsprogramm), Antiblockiersystem (ABS), Antischlupfreglung (ASR), Komponenten des Fahrzeuginnenraums, wie zum Beispiel Lautsprecher, Mikrofon, Klimaanlage, Antennen, Komponenten des Fahrzeugantriebs und der Steuerung, das Navigationssystem, das Infotainmentsystem und dergleichen testen.

Obwohl die vorliegende Erfindung vorstehend anhand bevorzugter Ausführungsbeispiele beschrieben wurde, ist sie darauf nicht beschränkt, sondern im Rahmen der Ansprüche auf vielfältige Art und Weise modifizierbar.

Insbesondere ist die vorliegende Erfindung nicht auf die angegebenen Satellitensysteme und Notrufsysteme beschränkt, auch wenn die Erfindung vorstehend speziell anhand des ERA-GLONASS Notrufsystems und des GLONASS-Satellitensystems, wie sie in der Russischen Föderation implementiert sind, beschrieben wurde. Vielmehr kann die Erfindung auch bei anderen Systemen vorteilhaft eingesetzt werden.

Darüber hinaus sei die vorliegende Erfindung auch nicht auf die vorstehend erwähnten Protokolle und Standards beschränkt, wie etwa den genannten Mobilfunkstandards, beschränkt. Schließlich seien auch die angegebenen Zahlenangaben lediglich illustrativ zu verstehen und sollen die Erfindung nicht dahingehend einschränken.

### Bezugszeichenliste

- 10: ERA-GLONASS Notrufsystem
- 11: GLONASS-Satellitensystem
- 12: Kraftfahrzeug
- 13: ERA-Modul, Telematik-Gerät
- 14: Mobilfunknetz
- 15: Notrufzentrale, PSAP
- 16: drahtlose Kommunikationsverbindung
- 17: Sattelitenverbindung

- 20: GLONASS-Empfänger
- 21: Hochfrequenz-Transceiver
- 22: Recheneinrichtung
- 23: Modem
- 24: Audio-Modul
- 25: Codec-Modul
- 26: SMS-Modul
- 27: Einrichtung zur Unfallerkennung
- 28: Notruftaste
- 29: Notrufsignal

- 30: Testanordnung
- 31: Testgerät
- 32: ERA-GLONASS Testserver
- 33: SMS-Rücksendebefehl
- 34: rückgesendetes MSD-Signal
- 34': MSD-Signal an Notrufzentrale
- 35: weitergeleitetes MSD-Signal
- 36, 37: Funktionsmodule
- 38: Kommunikationsverbindung
- 39: simulierte Basisstation

- 40: simuliertes Satellitensystem
- 42: Funksende-/Empfangseinrichtung
- 43: Teststeuereinrichtung
- 44: SMS-Modul
- 45: Testmodul

- 50: Testkammer
- 51: Sende-/Empfangsantenne
- 52 - 55: Komponenten
- 56: Daten-/Steuerbus

## Patentansprüche

1. Verfahren zum Testen eines KFZ-Telematik-Geräts eines mobilfunkgestützten KFZ-Notrufsystems (10), mit den Schritten:
Bereitstellen des mobilfunkgestützten automatischen KFZ-Notrufsystems (10) mit dem zu testenden fahrzeugseitig fest installierten KFZ-Telematik-Gerät (13), welches bei einem erkannten Verkehrsunfall automatisch eine Notrufmeldung umfassend einen Minimaldatensatz an eine Notrufzentrale absetzt;
Erzeugen eines speziellen SMS-Befehls (33) durch ein Testgerät (31), wobei der spezielle SMS-Befehl (33) eine Aufforderung zum Zusammenstellen und Zurücksenden von Testinformation, die zumindest einen Teil des Minimaldatensatzes umfasst, beinhaltet, wobei das Zurücksenden unter Verwendung einer SMS erfolgt;
Aufbauen einer Funkverbindung (38) von dem Testgerät (31) zu dem zu testenden KFZ-Telematik-Gerät (13);
Senden des erzeugten speziellen SMS-Befehls (33) mittels SMS von dem Testgerät (31) an das zu testende KFZ-Telematik-Gerät (13) über die aufgebaute Funkverbindung (38);
Aufnehmen eines von demselben KFZ-Telematik-Gerät (13) über die aufgebaute Funkverbindung (38) auf den SMS-Befehl (33) hin zurückgesendeten Antwortsignals (34);
Auswerten der in dem aufgenommenen Antwortsignal (34) enthaltenen Testinformation,
wobei die Funkverbindung (38) eine Mobilfunkverbindung (38) über ein Mobilfunknetz (14) ist, und wobei das Testen des zu testenden Telematik-Geräts (13) über diese Mobilfunkverbindung (38) erfolgt, und
wobei das Testen des zu testenden fahrzeuggebundenen Telematik-Geräts (13) während des Betriebs und im eingebauten Zustand erfolgt.

2. Verfahren nach Anspruch 1,
wobei das Antwortsignal (34) ein als SMS-Kurznachricht ausgebildetes Antwortsignal (34) ist.

3. Verfahren nach einem der vorstehenden Ansprüche,
wobei der SMS-Befehl (33) ein Rücksendebefehl ist, der derart ausgebildet ist, dass zu Testzwecken eine bidirektionale Kommunikationsverbindung zwischen dem Testgerät (31) und dem zu testenden KFZ-Telematik-Gerät (13) aufgebaut wird, ohne dass das zu testende KFZ-Telematik-Gerät (13) beim Empfang des SMS-Befehls (33) eine Notrufverbindung (16) mit einer Notrufzentrale (15) aufbaut.

4. Verfahren nach einem der vorstehenden Ansprüche,
wobei der SMS-Befehl (33) derart ausgebildet ist, das zu testende KFZ-Telematik-Gerät (13) dazu zu veranlassen, das Antwortsignal (34) mit zumindest einem Teil des Minimaldatensatzes zu erzeugen, welches an das den SMS-Befehl (33) sendende Testgerät (31) zurückgesendet wird.

5. Verfahren nach einem der Ansprüche 1 bis 4,
wobei der Minimaldatensatz zumindest eine der folgenden Testinformationen enthält:
- Format der übermittelten Informationen;
- Zeitinformationen;
- aktuelle Koordinaten des Kraftfahrzeugs;
- frühere Koordinaten des Kraftfahrzeugs;
- Fahrtrichtung;
- Fahrzeug-ID;
- Service-Provider-ID;
- Daten von Kraftfahrzeug-internen Sicherheitssystemen;
- Zahl der Fahrzeuginsassen;
- Antriebstyp.

6. Verfahren nach einem der vorstehenden Ansprüche,
wobei das Notrufsystem (10) das ERA-GLONASS Notrufsystem (10) ist.

7. Verfahren nach Anspruch 6,
wobei als der spezielle SMS-Befehl (33) der Befehl EGTS_ECALL_MSD_REQ bezeichnet ist, welcher im Protokoll für die Datenübertragung von Kraftfahrzeugnotrufsystemen gemäß dem russischen Standard GOST R 54619-2011 hinterlegt ist.

8. Verfahren nach einem der vorstehenden Ansprüche,
wobei das Testgerät (31) für die Funkverbindung (38) eine Basisstation (39) simuliert, wobei das Testen des zu testenden KFZ-Telematik-Geräts (13) über die von der simulierten Basisstation (39) erzeugten Funkverbindung (38) erfolgt.

9. Verfahren nach einem der vorstehenden Ansprüche,
wobei das Testgerät (31) ein Satellitensystem (40) simuliert, und wobei das Testen anhand von Satelliteninformationen des simulierten Satellitensystems (40) erfolgt.

10. Verfahren nach einem der vorstehenden Ansprüche,
wobei das Testen des zu testenden KFZ-Telematik-Geräts (13) in einer abgeschirmten Testkammer (50) erfolgt.

11. Testgerät (31) zum Testen eines KFZ-Telematik-Geräts eines KFZ-Notrufsystems (10), welches bei einem erkannten Verkehrsunfall automatisch eine Notrufmeldung umfassend einen Minimaldatensatz an eine Notrufzentrale absetzt,
mit einer Funksende-/Empfangseinrichtung (42), welche dazu ausgebildet ist, eine mobilfunkgestützte Kommunikation zu betreiben,
mit einer Teststeuereinrichtung (43) zur Steuerung eines Testvorgangs, welche ein SMS-Modul (44) aufweist, die dazu ausgebildet ist, einen speziellen SMS-Befehl (33) zu erzeugen, wobei der spezielle SMS-Befehls (33) eine Aufforderung zum Zusammenstellen und Zurücksenden von Testinformation, die zumindest einen Teil des Minimaldatensatzes umfasst, beinhaltet, wobei das Zurücksenden unter Verwendung einer SMS erfolgt,
mit einem Testmodul (45), welches dazu ausgelegt ist, das mobilfunkgestützte automatische KFZ-Notrufsystem (10) mit dem zu testenden KFZ-Telematik-Gerät (13) zu testen, indem der von dem SMS-Modul (45) erzeugte SMS-Befehl (33) mittels SMS über die Funksende-/Empfangseinrichtung (42) an das zu testende Telematik-Gerät (13) gesendet wird, ein von demselben KFZ-Telematik-Gerät (13) zurückgesendetes Antwortsignal (34) über die Funksende-/Empfangseinrichtung (42) aufgenommen wird und in dem Antwortsignal (34) enthaltene Testdaten ausgewertet werden während sich das zu testende fahrzeuggebundene Telematik-Geräts (13) in Betrieb und in einem eingebauten Zustand befindet,
wobei die Funksende-/Empfangseinrichtung (42) die funkgestützte Kommunikation über eine Mobilfunkverbindung (38) eines Mobilfunknetzes (14) betreibt, und wobei das Testen des zu testenden Telematik-Geräts (13) über diese Mobilfunkverbindung (38) erfolgt.

12. Testgerät nach Anspruch 11,
wobei ein erstes Funktionsmodul (36) vorgesehen ist, welches dazu ausgebildet ist, eine Basisstation (39) eines Mobilfunknetzes zu simulieren, und wobei das Testgerät (31) dazu ausgebildet ist, das KFZ-Telematik-Gerät (13) über die von der simulierten Basisstation (39) erzeugten Funkverbindung (38) zu testen.

13. Testgerät nach einem der Ansprüche 11 oder 12,
wobei ein zweites Funktionsmodul (37) vorgesehen ist, welches dazu ausgebildet ist, ein Satellitensystem (40) zu simulieren, und wobei das Testgerät (31) dazu ausgebildet ist, das zu testende KFZ-Telematik-Gerät (13) anhand von Satelliteninformationen des durch das zweite Funktionsmodul (37) simulierten Satellitensystems (40) zu testen.

14. Testgerät nach einem der Ansprüche 11 bis 13,
wobei das Testmodul (45) dazu ausgebildet ist, neben dem zu testenden KFZ-Telematik-Gerät (13) zusätzlich auch andere Funktionen desselben Kraftfahrzeugs zu testen und/oder ein zu testendes Notrufsystem (10) aktiv anzusprechen.

## Claims

1. Method for testing a motor vehicle telematics device of a mobile radio-assisted motor vehicle emergency call system (10), comprising the steps of:
providing the mobile radio-assisted automatic motor vehicle emergency call system (10) with the motor vehicle telematics device (13) to be tested, which is permanently installed in the vehicle and which automatically discharges an emergency call notification comprising a minimum data set to an emergency call center when a traffic accident is detected;
generating a special SMS command (33) using a test device (31), wherein the special SMS command (33) includes a request to collate and return test information comprising at least some of the minimum data set, wherein the returning of the information is performed using an SMS;
establishing a radio connection (38) from the test device (31) to the motor vehicle telematics device (13) to be tested;
sending the generated special SMS command (33) by SMS from the test device (31) to the motor vehicle telematics device (13) to be tested via the established radio connection (38);
recording a response signal (34) sent back by the same vehicle telematics device (13) via the established radio connection (38) to the SMS command (33);
evaluating the test information contained in the recorded response signal (34),
wherein the radio connection (38) is a mobile radio connection (38) via a mobile radio network (14), and wherein the testing of the telematics device (13) to be tested is performed via this mobile radio connection (38), and
wherein the testing of the on-board telematics device (13) to be tested is performed during operation and in the installed state.

2. Method according to claim 1,
wherein the response signal (34) is a response signal (34) designed as an SMS short message.

3. Method according to either of the preceding claims,
wherein the SMS command (33) is a return command designed such that, for testing purposes, a bidirectional communication connection between the test device (31) and the motor vehicle telematics device (13) to be tested is established, without the motor vehicle telematics device (13) to be tested establishing an emergency call connection (16) with an emergency call center (15) when the SMS command (33) is received.

4. Method according to any of the preceding claims,
wherein the SMS command (33) is designed to cause the motor vehicle telematics device (13) to be tested to generate the response signal (34) with at least some of the minimum data set, which is returned to the test device (31) that sends the SMS command (33).

5. Method according to any of claims 1 to 4,
wherein the minimum data set contains at least one of the following pieces of test information:
- format of the transmitted information;
- time information;
- current coordinates of the motor vehicle;
- earlier coordinates of the motor vehicle;
- driving direction;
- vehicle ID;
- service provider ID;
- motor vehicle internal safety systems data;
- number of vehicle occupants;
- drive type.

6. Method according to any of the preceding claims,
wherein the emergency call system (10) is the ERA-GLONASS emergency call system (10).

7. Method according to claim 6,
wherein the command EGTS_ECALL_MSD_REQ is identified as the special SMS command (33), which is consigned to the protocol for the data transmission of motor vehicle emergency call systems according to the Russian Standard GOST R 54619-2011.

8. Method according to any of the preceding claims,
wherein the test device (31) simulates a base station (39) for the radio connection (38), wherein the testing of the motor vehicle telematic device (13) to be tested is performed via the radio connection (38) generated by the simulated base station (39).

9. Method according to any of the preceding claims,
wherein the test device (31) simulates a satellite system (40), and wherein the testing is performed on the basis of satellite information from the simulated satellite system (40).

10. Method according to any of the preceding claims,
wherein the testing of the motor vehicle telematics device (13) to be tested is performed in a shielded test chamber (50).

11. Test device (31) for testing a motor vehicle telematics device of a motor vehicle emergency call system (10), which automatically discharges an emergency call notification comprising a minimum data set to an emergency call center when a traffic accident is detected,
comprising a radio transmission/reception unit (42), which is designed to operate a mobile radio-assisted communication,
comprising a test control unit (43) for controlling a test process, which has an SMS module (44) designed to generate a special SMS command (33), wherein the special SMS command (33) comprises a request to collate and return test information comprising at least some of the minimum data set, wherein the returning of the information is performed using an SMS,
a test module (45), which is designed to test the mobile radio-assisted automatic motor vehicle emergency call system (10) having the motor vehicle telematics device (13) to be tested, by sending the SMS command (33) generated by the SMS module (45) to the telematics device (13) to be tested by SMS via the radio transmission/reception unit (42), by a response signal (34) returned by the same motor vehicle telematics device (13) being recorded via the radio transmission/reception unit (42), and by test data contained in the response signal (34) being evaluated while the on-board telematics device (13) to be tested is in operation and in an installed state,
wherein the radio transmission/reception unit (42) operates the radio-assisted communication via a mobile radio connection (38) of a mobile radio network (14), and wherein the testing of the telematics device (13) to be tested is performed via this mobile radio connection (38).

12. Test device according to claim 11,
wherein a first functional module (36) is provided, which is designed to simulate a base station (39) of a mobile radio network, and wherein the test device (31) is designed to test the motor vehicle telematics device (13) via the radio connection (38) generated by the simulated base station (39).

13. Test device according to either claim 11 or claim 12,
wherein a second functional module (37) is provided, which is designed to simulate a satellite system (40), and wherein the test device (31) is designed to test the motor vehicle telematics device (13) to be tested on the basis of satellite information from the satellite system (40) simulated by the second functional module (37).

14. Test device according to any of claims 11 to 13,
wherein the test module (45) is designed to additionally test other functions of the same motor vehicle in addition to the motor vehicle telematics device (13) to be tested and/or to actively address an emergency call system (10) to be tested.

## Revendications

1. Procédé destiné à tester un appareil télématique de véhicule automobile d'un système d'appel d'urgence pour véhicule automobile (10) fondé sur la radiotéléphonie mobile, comportant les étapes de :
fourniture du système d'appel d'urgence pour véhicule automobile (10) automatique fondé sur la radiotéléphonie mobile comportant l'appareil télématique pour véhicule automobile (13) à tester, installé de manière fixe côté véhicule, lequel appareil transmet automatiquement, dans le cas d'un accident de la circulation détecté, un message d'appel d'urgence comprenant un jeu minimal de données à une centrale d'appel d'urgence ;
génération d'une instruction particulière par SMS (33) par un appareil de test (31), l'instruction particulière par SMS (33) comportant une invite à composer et à renvoyer des informations de test, qui comprennent au moins une partie du jeu minimal de données, le renvoi ayant lieu à l'aide d'un SMS ;
établissement d'une liaison radioélectrique (38) depuis l'appareil de test (31) à l'appareil télématique de véhicule automobile (13) à tester ;
envoi de l'instruction particulière par SMS (33) générée au moyen d'un SMS depuis l'appareil de test (31) à l'appareil télématique de véhicule automobile (13) à tester par l'intermédiaire de la liaison radioélectrique (38) établie ;
enregistrement d'un signal de réponse (34) renvoyé depuis le même appareil télématique de véhicule automobile (13) par l'intermédiaire de la liaison radioélectrique (38) établie à la suite de l'instruction par SMS (33) ;
évaluation des informations de test contenues dans le signal de réponse (34) enregistré,
la liaison radioélectrique (38) étant une liaison radiotéléphonique mobile (38) à travers un réseau radiotéléphonique mobile (14) et le test de
l'appareil télématique (13) à tester ayant lieu par l'intermédiaire de cette liaison radiotéléphonique mobile (38) et
le test de l'appareil télématique (13) à tester lié à un véhicule ayant lieu pendant le fonctionnement et dans l'état monté.

2. Procédé selon la revendication 1,
le signal de réponse (34) étant un signal de réponse (34) conçu comme un message court par SMS.

3. Procédé selon l'une des revendications précédentes,
l'instruction par SMS (33) étant une instruction de renvoi conçue de manière telle que, à des fins de test, une liaison de communication bidirectionnelle est établie entre l'appareil de test (31) et l'appareil télématique de véhicule automobile (13) à tester, sans que l'appareil télématique de véhicule automobile (13) à tester n'établisse une liaison d'appel d'urgence (16) avec une centrale d'appel d'urgence (15) lors de la réception de l'instruction par SMS (33).

4. Procédé selon l'une des revendications précédentes,
l'instruction par SMS (33) étant conçue pour permettre à l'appareil télématique de véhicule automobile (13) à tester de générer le signal de réponse (34) comportant au moins une partie du jeu minimal de données, qui est renvoyé à l'appareil de test (31) envoyant l'instruction par SMS (33).

5. Procédé selon l'une des revendications 1 à 4,
le jeu minimal de données contenant au moins l'une des informations de test suivantes :
- format des informations transmises ;
- informations temporelles ;
- coordonnées actuelles du véhicule automobile ;
- coordonnées antérieures du véhicule automobile ;
- sens de conduite ;
- 10 du véhicule automobile ;
- 10 du fournisseur de services ;
- données de systèmes de sécurité internes au véhicule automobile ;
- nombre d'occupants du véhicule ;
- type de motorisation.

6. Procédé selon l'une des revendications précédentes,
le système d'appel d'urgence (10) étant le système d'appel d'urgence (10) ERA-GLONASS.

7. Procédé selon la revendication 6,
l'instruction particulière par SMS (33) étant l'instruction EGTS_ECALL_MSD_REQ, qui est consignée dans le protocole pour la transmission de données de systèmes d'appel d'urgence de véhicules automobiles selon la norme russe GOST R 54619-2011.

8. Procédé selon l'une des revendications précédentes,
l'appareil de test (31) simulant, pour la liaison radioélectrique (38), une station de base (39), le test de l'appareil télématique de véhicule automobile (13) à tester ayant lieu par l'intermédiaire de la liaison radioélectrique (38) générée par la station de base (39) simulée.

9. Procédé selon l'une des revendications précédentes,
l'appareil de test (31) simulant un système de satellites (40) et le test ayant lieu à l'aide d'informations de satellites du système de satellites (40) simulé.

10. Procédé selon l'une des revendications précédentes,
le test de l'appareil télématique de véhicule automobile (13) à tester ayant lieu dans une chambre de test (50) blindée.

11. Appareil de test (31) destiné à tester un appareil télématique de véhicule automobile d'un système d'appel d'urgence de véhicule automobile (10), qui transmet automatiquement, dans le cas d'un accident de la circulation détecté, un message d'appel d'urgence comprenant un jeu minimal de données à une centrale d'appel d'urgence,
comportant un dispositif radioélectrique d'envoi/réception (42), qui est conçu pour gérer une communication fondée sur la radiotéléphonie mobile,
comportant un dispositif de commande de test (43) destiné à commander un processus de test, qui présente un module de SMS (44), conçu pour générer une instruction particulière par SMS (33), l'instruction particulière par SMS (33) comportant une invite à composer et à renvoyer des informations de test, qui comprennent au moins une partie du jeu minimal de données, le renvoi ayant lieu à l'aide d'un SMS,
comportant un module de test (45), qui est conçu pour tester le système d'appel d'urgence de véhicule automobile (10) automatique fondé sur la radiotéléphonie mobile comportant l'appareil télématique de véhicule automobile (13) à tester, en ce que l'instruction par SMS (33) générée par le module de SMS (45) est envoyée par SMS par l'intermédiaire du dispositif radioélectrique d'envoi/réception (42) à l'appareil télématique (13) à tester, un signal de réponse (34) renvoyé depuis le même appareil télématique de véhicule automobile (13) par l'intermédiaire du dispositif radioélectrique d'envoi/réception (42) est enregistré et les données de test contenues dans le signal de réponse (34) sont évaluées pendant que l'appareil télématique lié au véhicule automobile (13) à tester fonctionne et se trouve dans un état monté,
le dispositif radioélectrique d'envoi/réception (42) gérant la communication fondée sur une liaison radioélectrique par l'intermédiaire d'une liaison radiotéléphonique mobile (38) d'un réseau radiotéléphonique mobile (14) et le test de l'appareil télématique (13) à tester ayant lieu par l'intermédiaire de cette liaison radiotéléphonique mobile (38).

12. Appareil de test selon la revendication 11,
un premier module de fonction (36) étant prévu, qui est conçu pour simuler une station de base (39) d'un réseau radiotéléphonique mobile et l'appareil de test (31) étant conçu pour tester l'appareil télématique de véhicule automobile (13) par l'intermédiaire de la liaison radioélectrique (38) générée par la station de base (39) simulée.

13. Appareil de test selon l'une des revendications 11 ou 12,
un second module de fonction (37) étant prévu, qui est conçu pour simuler un système de satellites (40) et l'appareil de test (31) étant conçu pour tester l'appareil télématique de véhicule automobile (13) à tester à l'aide d'informations de satellites du système de satellites (40) simulé par le second module de fonction (37).

14. Appareil de test de selon l'une des revendications 11 à 13,
le module de test (45) étant conçu pour tester en plus, outre l'appareil télématique de véhicule automobile (13) à tester, d'autres fonctions du même véhicule automobile et/ou pour contacter activement un système d'appel d'urgence (10) à tester.
